# EUROPÄISCHE PATENTSCHRIFT

(11) **EP 1 529 561 B1**
(45) Veröffentlichungstag und Bekanntmachung des Hinweises auf die Patenterteilung: **03.02.2016**
(21) Anmeldenummer: 05000904.2
(22) Anmeldetag: 06.09.2000
(51) Int. Cl.: B01D 53/12, B01D 53/10

(54) **Verfahren, Vorrichtung und Anlage zum Behandeln von Fluiden an mindestens einer Schüttgutschicht**
Method, device and installation for treating fluids on at least one bulk material layer
Procédé et dispositif destinés au traitement de fluides au niveau d'au moins une couche de matériau en vrac

(30) Priorität: 06.09.1999 DE 19942335; 06.09.1999 DE 19942495
(43) Veröffentlichungstag der Anmeldung: 11.05.2005
(62) Teilanmeldung aus: 00962447.9
(73) Patentinhaber: Grochowski, Horst, 46149 Oberhausen (DE)
(72) Erfinder: Grochowski, Horst, 46149 Oberhausen (DE)
(74) Vertreter: Grosse Schumacher Knauer von Hirschhausen

(56) Entgegenhaltungen:
- EP-A- 0 472 565
- EP-A- 0 548 568
- US-A- 2 519 874

## Beschreibung

Die Erfindung betrifft ein Verfahren zum Behandeln, Insbesondere zum Reinigen von Fluiden gemäß dem Oberbegriff von Anspruch 1, sowie eine Fluidbehandlungsanlage.

Bei Anlagen zum Behandeln großer Gasmengen, wie sie z. B. als Abgas bei Verbrennungsprozessen anfallen, insbesondere zum Entfernen von umweltschädlichen Komponenten, wie Dioxinen, Furanen, Schwefelverbindungen, Chlorverblndungen, Stickstoffverbindungen, Kohlenwasserstoffen, Schwermetallen und/oder anderen Komponenten, an einem Schüttgut besteht ein wesentliches Problem in der Großflächigkeit der gelegentlich auch als "Filter" bezeichneten Schüttgutschicht. Es ist nämlich erwünscht, den Strömungswiderstand durch die Schüttgutschicht gering zu halten und gleichzeitig eine hohe Behandlungsqualität über den gesamten Filterquerschnitt dauerhaft sicherzustellen. Um dies zu erreichen muß das Schüttgut, wenn es im Gegenstrom zu dem zu behandelnden Fluid, also besonders wirkungsvoll, genutzt werden soll, im Wege eines Schüttgutteilaustausches immer wieder gleichmäßig am Boden der Schüttgutschicht, dem Anströmboden, abgezogen und ebenso gleichmäßig frisches Schüttgut über die Bettoberfläche verteilt zugeführt werden. Dieses Problem Ist großtechnisch mittels sogenannter Wanderbettreaktoren gelöst worden, wie sie in den Druckschriften WO 88/08746, WO 91/12069 und EP 0 472 565 beschrieben worden sind.

Bei diesen bekannten Verfahren, Vorrichtungen und Anlagen wird das Schüttgut über Schüttgutvorratsbunker und Schüttgutverteilböden, die unmittelbar oberhalb jedes Schüttgutbettes angeordnet sind, zugeführt. Die Schüttgutentladeöffnungen der Schüttgutverteilböden werden von permanent offenen Rohrmündungen gebildet, unterhalb derer sich jeweils ein Schüttgutkegel ausbildet. Da diese Mündungsöffnungen über den Bettquerschnitt gleichmäßig verteilt sind, ist die Schüttgutbettoberfläche von einer Mehrzahl solcher Schüttgutkegel gebildet. Der zwischen der Schüttgutbettoberfläche und dem Schüttgutvertellboden zwangsläufig verbleibende Hohlraum jedes Bettes dient als Gassammelraum, der über eine verschließbare Öffnung In der Seitenwand des das Schüttgutbett aufnehmenden Behälters (Reaktors) mit einem Gassammel- oder Abströmkanal, In den die zusammengefaßten Abgasströme aller Betten münden, verbunden ist. Durch die permanent offenen Mündungs- oder Entladeöffnungen des Schüttgutverteilbodens kann zu behandelndes Fluid auch in den Schüttgutvorratsbunker eindringen. Daher sind besondere Vorkehrungen zu treffen, daß die Nachfüllöffnungen der Schüttgutvorratsbunker stets ausreichend dicht verschlossen sind und daß in den Vorratsbunkern eindringende behandelte Gase in den Vorratsbunkem keine unerwünschten Reaktionen, wie z. B. durch sauerstoffhaltige Schleichströmung, sogenannte Hot Spots, hervorrufen.

Ein weiteres Problem besteht darin, daß die Eignung der verfügbaren Behandlungsschüttgüter sehr unterschiedlich ist und für besonders hohe Konzentrationen an zu behandelnden Fluidkomponenten und/oder sehr unterschiedlichen zu behandelnden Fluidkomponenten - für sich allein genommen - nicht ausreichen, um das gewünschte Behandlungsergebnis in einem einzigen Arbeitsgang zu erreichen.

Ein weiteres Problem bei den bekannten Fluidbehandlungsanlagen besteht darin, daß die Art des Verteilens des Schüttgutes auf die Reaktorbetten und/oder das Austragen des Schüttgutes eine relativ starre Festlegung auf eine vorbestimmte Verfahrensweise bei der Fluidbehandlung zur Folge haben.

Davon ausgehend liegt der Erfindung die Aufgabe zugrunde ein Verfahren, einen Schüttgutfilter und eine Fluidbehandlungsanlage vorzuschlagen, durch welche eine höhere Flexibilität der Fluidbehandlung mittels eines mit Schüttgut gefüllten Wanderbettreaktors erreicht wird.

Da die bekannten Wanderbettreaktoranlagen eine Im Vergleich zur Betthöhe große Anlagenhöhe aufweisen, besteht ein anderes Ziel darin, die Anlagengröße und damit auch den Erstellungsaufwand einer solchen Anlage deutlich zu verringern.

Da bei den bekannten Wanderbettreaktoranlagen die automatische oder teilautomatische Nachfüllung der Vorratsbunker oberhalb der benachbarten Schüttgutbetten z. B. über Kettentrogförderer und öffen- und schließbare Vorratsbunkertuken erfolgt, besteht ein weiteres Ziel der Erfindung darin, den Aufwand für die Schüttgutverteilung auf die einzelnen Schüttgutbetten zu verringern. Es Ist auch erwünscht, den Abriebverschleiß, den das Schüttgut in den bekannten Schüttgutverteileinrichtungen erleidet, zu verringern, allgemein also das frische Schüttgut besser zu schonen.

Schließlich besteht noch ein anderes Ziel der Erfindung darin, die Fluldbehandlungsmöglichkeiten in ein und derselben Behandlungsstufe zu erweitern, insbesondere eine vereinfachte Möglichkeit zu schaffen, um das Fluid an Schüttgütern mit unterschiedlichen Behandlungseigenschaften bei Verwendung ein und derselben Schüttgutschicht zu behandeln, wie z. B. einerseits auf adsorptivern Wege und andererseits auf dem Wege der chemischen Umsetzung, wie dies für Schüttgutmischungen z. B. aus Aktivkohle oder Aktivkoks einerseits und Calciumhydroxyd andererseits bekannt ist, wie z. B. beim Flugstromverfahren, bei dem Schüttgüter zur Ausbildung eines Flugstromes (mit dem zu behandeinden Fluid) feln aufgemahlen werden.

Zur Lösung der eingangs genannten Aufgabe wird das Verfahren mit den Merkmalen der Ansprüche 1 sowie einen Schüttgutfilter und/oder Fluidbehandlungsanlagen mit den Merkmalen eines der Ansprüche 13 oder 16 vorgeschlagen.

Demnach basiert die Erfindung auf dem Grundgedanken eines als Wanderbettreaktor ausgebildeten Schüttgutfilters. Ein besonders vorteilhaftes Fluidbehandlungsverfahren (Anspruch 1) besteht darin, kombiniert im Flugsstrom mit nachgeschaltetem Wanderbett das Fluid an zwei festen Schüttgütern zu behandeln, wobei das Wanderbett als Filter und Nachreaktionsstufe für das erste dem Fluidstrom aufgegebene feinteilige Schüttgut sowie als die zweite Behandlungsstufe dient.

Bei bekannten Verfahren zum einstufigen Behandeln, insbesondere zum Reinigen von Fluiden, insbesondere von Gasen, mit mindestens einem ersten Schüttgut im Flugstrom ist es gebräuchlich, das erste Schüttgut in einem von dem Fluid generierten Flugstrom zu verteilen und von diesem bis zu einem Tuch-Filter mitreißen zu lassen und dort zurückzuhalten, während das Fluid den Tuch-Filter durchströmt.

Eine erfindungsgemäße Fluidbehandlungsanlage nach Anspruch 16 arbeitet hingegen zweistufig, wobei als Filter für die Flugstromstufe ein ein Schüttgutbett als Filterfläche aufweisender Wanderbettreaktor verwendet wird. Dieser kann nicht nur als Nachreaktionsstufe für die (erste) Flugstromstufe dienen, sondern stellt gleichzeitig eine zweite Behandlungsstufe dar. Bei dieser durchströmt das Fluid ein Schüttgutbett von unten nach oben und ein zweites das Schüttgutbett bildendes Schüttgut durchwandert im Gegenstrom zum Fluid den Wanderbettreaktor von oben nach unten. Am unteren Ende des Schüttgutbettes werden Schüttgutteilmengen abgezogen und am oberen Ende des Schüttgutbettes aufgegeben. An dem zweiten Schüttgut, d. h. dem Schüttgut des Schüttgutbettes, und im Zwischenkorn-Volumen zwischen seinen Schüttgutpartikel setzt sich das erste Schüttgut oder eine Fraktion davon aus dem Fluidstrom ab. Gemeinsam mit den auszutragenden Schüttgutteilmengen werden das gebrauchte erste und zweite Schüttgut am unteren Ende des Schüttgutbettes abgezogen. - Dieses Verfahren läßt sich natürlich auch dann vorteilhaft einsetzen, wenn die Befüllung des Wanderbettreaktors über stationäre Vorratsbunker und nicht über den erfindungsgemäß verfahrbaren Schüttgutaufgabebehälter erfolgt.

Mit diesem Verfahren eröffnet sich eine völlig neue Dimension der Flugstromtechnologie, und zwar für eine komplexere Behandlung von Gasen mit fein aufgemahlenen Schüttgütern im Flugstrom sowie zu deren Abscheldung.

In beiden Fällen besteht nämlich das Problem, daß sich an der Filteroberfläche ein sogenannter Filterkuchen bildet, der ständig wächst. Das erhöht den Druckverlust allmählich. Zum anderen erhöht sich auch die Verweilzeit des zu filternden Gases in dem Filterkuchen allmählich. Weil nach einer gewissen Zeit der Druckverlust im Filterkuchen zu groß wird, muß dieser entfernt und nachfolgend neu aufgebaut werden. Dieses ist aufwendig und führt zu Inkontinuitäten in der Fluidbehandlung.

Beide Probleme werden durch das erfindungsgemäße, als Wanderbettreaktor ausgebildete Schüttgutfilter vermieden, well die Behandlungs-Partikel aus dem eintretenden Fluid sich in der Eingangszone des Schüttgutbettes absetzen, also dort, wo Schüttgut kontinuierlich oder quasi kontinuierlich aus dem Wanderbettreaktor abgezogen wird. Dadurch bleibt die Filtrationsleistung vergleichsweise konstant, so daß die oben erwähnten Inkontinuitäten weitgehend vermieden werden. Hier wird also ein sich quasi kontinuierlich selbstreinigender, die Filterkuchenstärke quasi konstant haltender Filter verwirklicht, der praktisch nie gereinigt werden muß.

Der besondere Vorteil dieses Verfahrens nach Anspruch 1 besteht darin, daß die (zweiten) Schüttgutpartikel des Wanderbettreaktors für weitere Fluidverhandlungsschritte dienen. So kann z. B. das dem zu behandelnden Fluidstrom unter Ausbildung eines Flugstromes aufgegebene erste Schüttgut staubförmige Aktivkohle sein, mit der eine adsorptive Gasreinigung durchgeführt wird, wobei diese zum Teil in der Flugstromphase und zum Teil dann stattfindet, wenn diese Aktivkohle in dem Wanderbettreaktor eingefangen ist. Dabei kann die Eindringtiefe der Partikel des ersten Schüttgutes in das Schüttgutbett durch entsprechende Steuerung des Schüttgutteilmengenaustausches beeinflußt werden.

Die zweiten Schüttgutpartikel können z.B. aus Adsorbentien, wie Calciumhydroxyd, NaOH oder einem anderen zur Behandlung des Fluides geeignetem festen partikelförmigen Material für die chemische Behandlung von anorganischen Schadstoffen, wie HCl, SO₂ etc., bestehen. Als Schüttgut für die Wanderbettreaktoren kommen unter anderem auch ein Granulat aus Braunkohle, Steinkohle, Kalkstein und/oder Sorbalit in Frage, die wiederum auch schichtweise im Schüttgutbett vorliegen können, was der Schüttguttransportwagen (Schüttgutaufgabebehälter) ermöglicht.

Außerdem versteht es sich, daß die aus dem Wanderbettreaktormodulen ausgetragenen Schüttgüter auch nach Schüttgutarten getrennt ausgetragen und auch wiederverwendet werden können, falls ihre Fluidbehandlungskapazität noch nicht voll ausgeschöpft ist.

### Ausführungsbeispiel 1

Es soll ein Gas von gasförmigen Schadstoffkomponenten, die zumindest teilweise nicht besonders gut adsorptiv gebunden werden können, gereinigt werden, z. B. von HCl, welches im Vergleich zu anderen in dem Abgas vorhandenen Schadstoffen, wie schweren Kohlenwasserstoffen, besser abgeschieden werden soll. Hierzu wird eine z.B. alkalische Verbindung in Partikelform (erstes Schüttgut) dem Abgas unter Ausbildung einer Flugstromwolke zugegeben. Durch die Zugabe von z. B. Calciumhydroxid (Ca(OH)₂) als alkalische Verbindung entsteht durch chemische Reaktion mit dem HCl Calciumchlorid (CaCl₂). Das Ca(OH)₂, dessen Körnung z. B. im µm-Bereich liegt, lagert sich auf der Oberfläche der Granulatkörner (zweites Schüttgut) im Schüttgut eines Gegenstromwanderbettreaktors der In den Figuren dargestellten Art ab. Da sich diese Ablagerung auf den Bereich des Anströmbodens des Gegenstromwanderbettreaktors konzentriert, werden die, ggf. chemisch veränderten, Partikel des ersten Schüttgutes zusammen mit den Granulatkömem des Schüttgutbettes schichtweise aus dem Gegenstromwanderbettreaktor ausgetragen.

Die Zudosierung des ersten Schüttgutes unter Ausbildung einer von dem zu behandelnden Abgas generierten Flugstromwolke erfolgt vorzugsweise getaktet, kann aber auch kontinuierlich durchgeführt werden. Durch die getaktete Dosierung wird ein besonders hoher chemischer Umsetzungsgrad, z. B. des Ca(OH)₂, erreicht. Dadurch werden Betriebsmittelkosten gesenkt.

Das den Flugstrom generierende, zu reinigende Abgas kann z. B. aus der Verbrennung von Biogasen oder von flüssigen oder gasförmigen chlorhaltigen Reststoffen stammen, bei denen kein oder nur sehr wenig feste Fremdstoff in Form von Staub enthalten sind oder entstehen. In diesen Fällen kann die Dosierung des ersten Schüttgutes unter Ausbildung der Flugstromwolke besonders intensiv erfolgen.

Wenn als Führungsgröße für das Austragen des Granulat/Partikel-Gemisches der Druckverlustanstieg im Gegenstromwanderbettreaktor verwendet wird, kann es sein, daß die volle Beladefähigkeit des Granulates mit schweren Kohlenwasserstoffen oder anderen aus dem Abgas zu reinigenden Schadstoffen noch nicht ausgeschöpft ist (dies kann natürlich auch für die Partikel aus der Flugstromwolke der Fall sein). In solchen Fällen können die Partikel (das erste Schüttgut) von dem Granulat (zweites Schüttgut) nach dem Austragen aus dem Gegenstromwanderbettreaktor getrennt werden und je nach Brauchbarkeit im Kreislauf in den zweistufigen Reinigungsprozeß zurückgeführt werden.

### Ausführungsbeispiel 2

Bei Sinterprozessen wird u. a. preiswerter Koks als Brennstoff eingesetzt. Dieser Koks kann vor dem Verbrennen auf dem Sinterband als Adsorptionsmittel in einem Gegenstromwanderbettreaktor dienen, um die Abgase aus dem Sinterprozeß von Schadstoffen adsorptiv zu reinigen, z. B. von Dioxinen, Furanen, unverbrannten schweren Kohlenwasserstoffen, Quecksilber u. a. Da der hierfür verwendete, in dem Sinterprozeß nachfolgend als Wärmequelle durch Verbrennen dienende Koks keine sonderlich guten adsorptiven Eigenschaften für die Abgasreinigung in dem Gegenstromwanderbettreaktor haben mag, kann der Fall eintreten, daß die geforderte Reingaskonzentration des gereinigten Abgases, z. B. bezüglich der Dioxine und Furane, unzureichend bleibt, wenn diese Schadstoffe in besonders hohen Konzentrationen im zu reinigenden Abgas auftreten. In einem solchen Fall wird dem Gegenstromwanderbettadsorber eine Flugstromreinigungsstufe unmittelbar vorgeschaltet. In dieser Flugstromstufe wird dem zu reinigenden Abgas ein Absorptionsmittel vergleichsweise höherer Qualität eingeblasen. Hierzu kann es bereits ausreichen, eine Teilmenge des genannten Kokses, besser aber einen hochwertigen Aktivkoks in gemahlener Form, also mit relativ kleineren Partikelgrößen als das Koksgranulat zu verwenden. In dieser Flugstromwolke werden dann bereits ein Teil der Schadstoffe an dem feinteiligen Adsorptionsmittel adsorbiert - und zwar sowohl in der Flugstromphase als auch nach dem Anlagern im Eingangsbereich des Schüttgutbettes des Gegenstromwanderbettreaktors (Nachreaktion). Die restliche Abgasreinigung erfolgt in üblicher Weise an dem partikelförmigen Koks im Gegenstromwanderbettreaktor.

Da bei solchen Sinterprozessen relativ große Koksmengen verbrannt werden, steht vergleichsweise viel zweites Schüttgut für das Schüttgutbett des Gegenstromwanderbettreaktors zur Verfügung, so daß die Schadstoffabscheidung und der Druckverlust sowie die Zudosierung von feinteiligem Adsorptionsmittel in den Flugstrom aufeinander abgestimmt und optimiert werden können. Während bevorzugte Kömungen des Koksgranulates im Bereich zwischen 2 - 6 mm liegen, ist die Körnung der Partikel für den Flugstrom deutlich geringer. Daher ist es auch möglich, den Rohkoks zunächst zu sieben und einen Siebschnitt oberhalb von 2 mm für den Gegenstromwanderbettreaktor und den Feinkomanteil oder Teile des Feinkomanteils für die Reinigung im Flugstrom zu veruvenden.

Es ist nun möglich, die Fluidbehandlungsanlage auf verschiedene Weise auszuführen. Unter Anderem wird vorgeschlagen, einen Schüttgutaufgabebehälter innerhalb oder außerhalb des Reaktors zu verwenden, der in einer Chargierposition mit Schüttgut beladen und über die verschiedenen Schüttgutbetten zur Schüttgutteilmengenabgabe verfahren wird. Dies kann Insbesondere so erfolgen, daß der Schüttgutaufgabebehälter mit mindestens einer Beladeöffnung und mindestens einer verschließbaren Entladeöffnung versehen ist und nach dem Beladen mit Schüttgut aus der Chargierposition heraus über ein erstes Bett verfahren wird. Dort wird mindestens eine Entladeöffnung freigegeben und er wird solange entladen, bis das darunter befindliche Schüttgutbett seine Sollhöhe an Schüttgut wieder erreicht hat, nachdem zuvor oder gleichzeitig am unteren Bettende eine Schüttgutteilmenge abgezogen worden ist. Danach wird die mindestens eine Entladeöffnung verschlossen und der Schüttgutaufgabebehälter zu einem anderen Bett oder in eine andere Beladeposition desselben Bettes weiterverfahren. Danach kann sich der Vorgang der Bettnachfüllung bei dem nächsten angefahrenen Schüttgutbett wiederholen. Später kehrt der Schüttgutaufgabebehälter in seine Chargierposition zurück, um wieder neu mit Schüttgut beladen zu werden.

Ein Schüttgutaufgabebehälter ist zweckmäßigerweise so breit wie die Breite des Schüttgutbettes quer zur Verfahrrichtung des Schüttgutaufgabebehälters. Die in Verfahrrichtung gesehene Länge des Schüttgutaufgabebehälters kann so groß wie die Länge eines oder mehrerer der nachzufüllenden Schüttgutbetten, aber auch kürzer, z. B. halb so lang oder noch kürzer sein. Ebenso ist es möglich, den Schüttgutaufgabebehälter mit einer Mehrzahl von über seine Bodenfläche verteilten verschließbaren Entladeöffnungen zu versehen. Es ist aber auch möglich, die Entladeöffnungen in einer einzigen Reihe nebeneinander anzuordnen oder einen länglichen Spalt als Entladeöffnung zu verwenden, insbesondere mit dem Schüttgutaufgabebehälter während des Entladevorganges entlang der Verfahrrichtung weiter zu fahren bzw. in verschiedenen Positionen nur kurz anzuhalten, so daß das Schüttgutnachfüllen allmählich, von der einen Schüttgutbett-Kante beginnend bis zur gegenüberliegenden Schüttgutbett-Kante sukzessive erfolgt. Durch die geöffneten Entladeöffnungen kann in jedem Fall nur solange Schüttgut aus dem Schüttgutaufgabebehälter austreten, bis die sich darunter befindende Schüttgutschicht die Entladeöffnung des Schüttgutaufgabebehälters erreicht hat und dadurch den Nachstrom von Schüttgut stoppt. Wenn der Schüttgutaufgabebehälter während der Schüttgutteilmengenzugabe auf ein bestimmtes Schüttgutbett kontinuierlich oder absatzweise weiterbewegt wird, können dadurch besonders erwünschte Topographien an der Schüttgutbettoberfläche erzielt werden. Insbesondere kann mit relativ wenigen Entladeöffnungen eine Welligkeit vergleichsweise geringer Amplitude als Schüttgutbettoberflächenkontur erzielt werden und der Schüttgutaufgabebehälter entsprechend einfach gestaltet werden.

Ebenso wie die Schüttgutbetten durch Verfahren des unten offenen Schüttgutaufgabebehälters entlang der Schüttgutbettoberfläche mit einer Schüttgutteilmenge aufgefüllt werden können, ist es möglich, den Schüttgutaufgabebehälter mittels mindestens eines Chargierbehälters mit linienförmig ausgebildeter Chargieröffnung zu chargieren, indem der Chargierbehälter und/oder der Schüttgutaufgabebehälter relativ zueinander bewegt werden.

Es können auch mehrere Chargierttehälter mit linienförmiger Chargieröffnung zum Einsatz kommen, welche mit unterschiedlichen Schüttgütern befüllt sind, z. B. einer mit einem Adsorptionsmittel und ein anderer mit einem chemischen Reaktionsmittel. Wenn die Chargierbehälter nacheinander relativ zum Schüttgutaufgabebehälter verfahren werden und dabei jeweils eine andere Schüttgutschicht in den Schüttgutaufgabebehälter abgeben wird, wird der Schüttgutaufgabebehälter somit mit etwa parallelen, insbesondere planparallelen Schichten verschiedener Fluidbehandlungsmittel gefüllt. Das gleiche kann erreicht werden, wenn der Schüttgutaufgabebehälter bei seiner Befüllung unter einem geteilten Vorratsbunker mit nebeneinanderliegenden Auslaßöffnungen entlangfährt. Dann können planparallele Schichten von verschiedenen Granulaten übereinander erzeugt werden. Die Schichtstärke wird dabei durch den vertikalen Abstand der Vorratsbunkerauslaßöffnungen bestimmt Wenn beim Schüttgutteilaustausch die Schüttgutzugabemenge entsprechend gesteuert wird, wird sowohl von dem einen als auch von dem anderen Schüttgut mindestens je eine dünne Schicht in das jewellige Schüttgutbett überführt. Dadurch wird es möglich, schichtweise aufgebaute Schüttgutbetten zu realisieren, innerhalb derer gleichzeitig verschiedene Gasbehandlungsprozesse stattfinden, wie z. B. Adsorptionsprozesse und chemische Umwandlungsprozesse. Es können auch mehrere mit unterschiedlichen Fluidbehandlungsmitteln befüllte Schüttgutaufgabebehälter nacheinander über die Schüttgutbetten gefahren werden, um denselben Schichteneffekt zu erzielen. Oder derselbe Schüttgutaufgabebehälter wird nacheinander mit jeweils anderen Fluidbehandlungsmitteln befüllt und über denselben Schüttgutbetten entleert. Auch kann eine Schüttgutschicht als Gemisch aus verschiedenen Granulaten aufgebaut sein.

Aus dem Vorangehenden wird deutlich, daß eine "Fluidbehandlung" im Sinne der Erfindung u. a. eine chemische Behandlung, eine adsorptive Reinigungsbehandlung, aber auch eine Wärmebehandlung sein kann. Wärmebehandlungen können z. B. durch Eintragen von Wärmeenergieträgern oder durch Wärmeerzeugung durch chemische Reaktion realisiert werden.

Eine Gasbehandlungsanlage zum Durchführen des vorangehend beschriebenen Verfahrens kann einen horizontalen Chargierkanal aufweisen, der oberhalb der Schüttgutbetten angeordnet ist und diese miteinander verbindet, so daß der Schüttgutaufgabebehälter durch den Chargierkanal zwischen einer Chargierposition und den Schüttgutaufgabepositionen oberhalb der Betten verfahrbar ist. Ein derartiger Chargierkanal kann oberhalb von Schüttgutverteilböden angeordnet sein, die oberhalb jedes Schüttgutbettes angeordnet sind. Der Chargierkanal kann außerhalb des Reaktors angeordnet sein; vorzugsweise ist er innerhalb des Reaktors untergebracht Er kann die Vorratsbunker ersetzen. Die nach dem Stand der Technik vorgesehenen Vorratsbunker für jedes Schüttgutbett können also oberhalb der Schüttgutverteilböden zu einem gemeinsamen horizontalen Chargierkanal zusammengefaßt werden. Dadurch entfallen sowohl die Einfüllöffnungen für die Vorratsbunker als auch der materialverschleißende Transport des Schüttgutes oberhalb der Reaktordecke, wie er aus dem eingangs zitierten Stand der Technik bekannt ist. Genauso ist es möglich, auch die Schüttgutverteilböden völlig entfallen zu lassen und die Gassammelräume benachbarter Schüttgutbetten miteinander zu einem horizontalen Chargierkanal zusammenzufassen. Dadurch wird die Bauhöhe der Gasbehandlungsanlage noch stärker verringert. Bei einer derartigen Anordnung kann der Schüttgutaufgabebehälter die Funktion von Drossel- oder Verschließklappen übernehmen, welche einen Austritt von behandeltem Gas aus einem Schüttgutbett verhindert, wenn der Schüttgutaufgabebehälter oberhalb des betreffenden Schüttgutbettes steht und eine Schüttgutteilnachfüllung vorgenommen wird. Dies drosselt oder verhindert den Gasstrom durch das betreffende Schüttgutbett, wie es In dem Dokument WO 91/12069 gewünscht wird. Vorteilhafterweise können bei der hier vorliegenden Erfindung die Drossel- oder Absperrorgane deren Funktion der Schüttgutaufgabebehälter übernimmt, entfallen.

Der Schüttgutabzug unterhalb jedes Schüttgutbettes kann, wie im eingangs erwähnten Stand der Technik beschrieben, über Trichter oder zur Erzielung geringerer Bauhöhe mittels eines Förderbandes erfolgen. Besonders vorteilhaft ist es allerdings, wenn unterhalb der Schüttgutaustragsöffnungen der Schüttabzugsböden der einzelnen Schüttgutbetten ein horizontaler Entsorgungskanal vorgesehen ist, durch welchen ein für alle verbundenen Schüttgutbetten wirksames Längsfördermittel für Schüttgutabtransporte verfahrbar ist. Dies kann ein Förderband sein. Besonders vorteilhaft ist es allerdings, einen Schüttgutaufnahmebehälter vorzusehen, der sich - wie der Schüttgutaufgabebehäfter - über die gesamte Bettbreite erstreckt und in der Bettlängsrichtung verfahrbar ist. Verfahrenstechnisch besonders günstig ist es, wenn sowohl der Schüttgutaufgabebehälter als auch der Schüttgutaufnahmebehälter jeweils oberhalb und unterhalb desselben Schüttgutbettes in Position gelangen. Wenn dann Schüttgutaustragsvorrichtungen des betreffenden Schüttgutbettes geöffnet bzw. betätigt werden, fällt das abgezogene Schüttgut sogleich in den Schüttgutaufnahmebehälter und an der Schüttgutbettoberfläche fließt von oben frisches Schüttgut aus dem Schüttgutaufgabebehälter nach. Dadurch ist gewährleistet, daß stets die volle Betthöhe eingehalten wird.

In allen Fällen, in denen ein gemeinsamer Entsorgungskanal unterhalb der benachbarten Schüttgutbetten vorgesehen ist, ist nur eine einzige Schüttgutaustragsstelle für die gesamte Gasbehandlungsanlage bzw, einen Strang von benachbarten Schüttgutbetten erforderlich, so daß vergleichsweise weniger Maßnahmen zum Verhindern von Gasleckagen erforderlich sind. Für den Entsorgungskanal sind - ebenso wie für den Chargierkanal - wiederum zwei Anordnungsmöglichkelten realisierbar: Bei der einen Anordnung ist der Entsorgungskanal anstelle von Schüttgutaustragstrichtern unterhalb des geschlossenen Gasverteilraums vorgesehen. In dem anderen Fall wird der Entsorgungskanal höher angeordnet, nämlich innerhalb der Gasverteilräume der benachbarten Schüttgutbehälter, die zu diesem Zweck unter Fortlassen von seitlichen Trennwänden miteinander zu dem Entsorgungskanal verbunden werden. Hierdurch wird die Anlagenhöhe weiter verringert und kann der Schüttgutaufnahmebehälter die Funktion von Drossel- oder Absperrmitteln erfüllen, indem er die Gaseintrittsöffnungen zum Gasverteilraum unterhalb des Schüttgutbettes, unter dem sich der Schüttgutaufnahmebehälter gerade befindet, verschließt oder zumindest querschnittsverengt, so daß zu Zeiten des Schüttgutteilaustausches nur verringerte Mengen an zu behandeindem Gas oder gar kein Gas in das im Schüttgutteilaustausch befindliche Schüttgutbett strömen kann.

Die Chargierpositionen können auch beidendig der Verfahrstrecke vorgesehen sein, um den Strom an zu behandelndem Gas sowenig wie möglich zu beeinträchtigen. Es ist denkbar, in der Chargierposition den Schüttgutaufgabebehälter auch vertikal zu einer anderen Etage zu verfahren, z. B. im Kreislauf über zwei Ebenen.

Ein besonders hoher Nutzen wird durch ein zweistufiges, insbesondere trockenes Fluidbehandlungsverfahren nach Anspruch 5 erreicht, bei dem eine Behandlung im Flugstrom und eine Behandlung im Wanderbett, vorzugsweise mit voneinander verschiedenen Behandlungsmitteln, kombiniert werden.

Die vorgenannten, sowie die beanspruchten und in den Ausführungsbeispielen beschriebenen, erfindungsgemäß zu verwendenden Verfahrensschritte sowie Bauteile unterliegen hinsichtlich ihrer Verfahrensbedingungen, Ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, In der - beispielhaft - bevorzugte Ausführungsformen der Chargiervorrichtung und Gasbehandlungsanlage sind. In der Zeichnung zeigen
- Fig. 1a: eine Fluidbehandlungsanlage im Längsschnitt (Schnitt entlang der Linie la-la gemäß Fig. 2b);
- Fig. 1b: eine vergrößerte Darstellung des rechten Teils der Fig. 1a;
- Fig. 2a: dieselbe Fluidbehandlungsanlage im Querschnitt (Schnitt entlang der Linie IIa-IIa gemäß Fig. 1 a);
- Fig. 2b: dieselbe Fluidbehandlungsanlage im Querschnitt (Schnitt entlang der Linie IIb-IIb gemäß Fig. 1a);
- Fig. 3: von derselben Gasbehandlungsanlage einen verfahrbaren Schüttgutaufgabebehälter in perspektivischer Darstellung;
- Fig. 4a: von derselben Fluidbehandlungsanlage ein weiterer Querschnitt (Schnitt entlang der Linie IVa-IVa gemäß Fig. 1a);
- Fig. 4b: von der Darstellung nach Fig. 4a ein vergrößerter Ausschnitt;
- Fig. 5: für eine alternative Fluidbehandlungsanlage einen Schüttgutaufgabebehälter mit einem Chargierbehälter, perspektivisch;
- Fig. 6a: von derselben Fluidbehandlungsanlage eine perspektivische Darstellung des in Fig. 4a gezeigten Anlagenteils (ohne Schüttgut);
- Fig. 6b: dieselbe Fluidbehandlungsanlage wie in Fig. 6a dargestellt, jedoch ohne Schüttgutaufgabe- und Schüttgutaufnahmebehälter aber mit Schüttgutschicht.

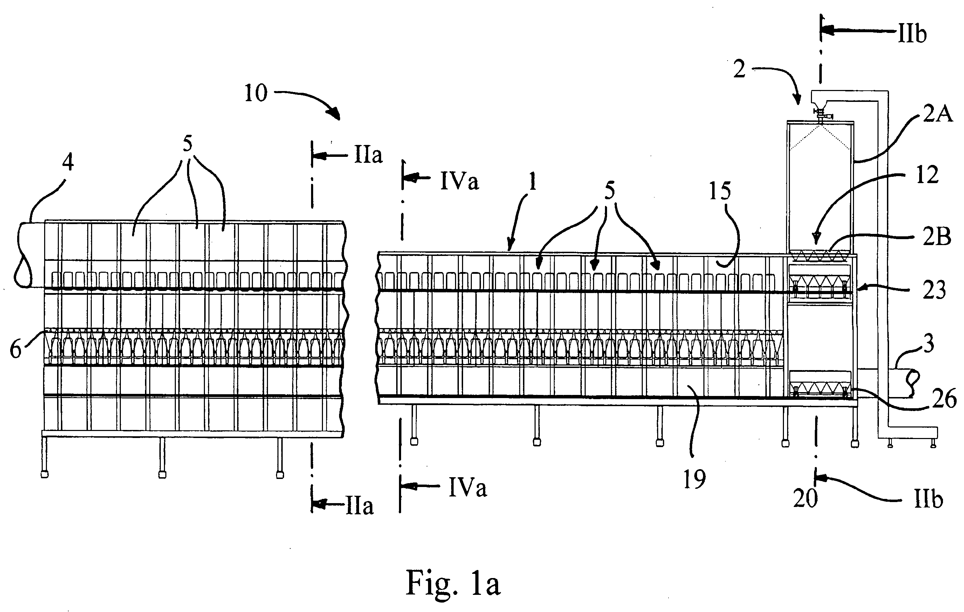

In Fig. 1a ist ein Rohrkanal 1 erkennbar, an dessen rechtem Stirnende sich eine Chargierstation 2 und ein Gaseintrittsatutzen 3 und an dessen linkem Ende sich ein Gasaustrittsstutzen 4 befindet, durch welche die Im Inneren des Rohrkanals 1 sich befindende Fluidbehandlungsanlage 10 mit dem zu behandelnden Fluid beaufschlagt bzw. davon entsorgt wird. Der Rohrkanal 1 kann also im Fluidweg vorgeschaltete oder nachgeschaltete Reaktoren verbinden, z. B. eintrittsseitig einen thermischen Reaktor, wie eine Wärmebehandlungsanlage, und andererseits eine nachgeschaltete Fluidbehandlungs-/Reinigungsstufe oder einen Abgaskamin. Je nach vorhandenen Platzverhältnissen kann der Rohrkanal 1 auch mindestens eine Fluidumlenkstelle aufweisen, so daß Gaseintrittsstutzen und Gasaustrittsstutzen relativ dicht nebeneinander angeordnet sein können. Er kann ebenso horizontal wie vertikal meandrierend ausgeführt sowie mehrlagig ausgeführt sein, also mehrere Fluldumlenk- oder Verteilstellen besitzen, um den gegebenen Platzverhältnissen gerecht zu werden. So können in bequemer Weise relativ große Filterflächen, d. h. für Behandlungsanlagen für außerordentlich große Fluidströmungsraten, realisiert werden.

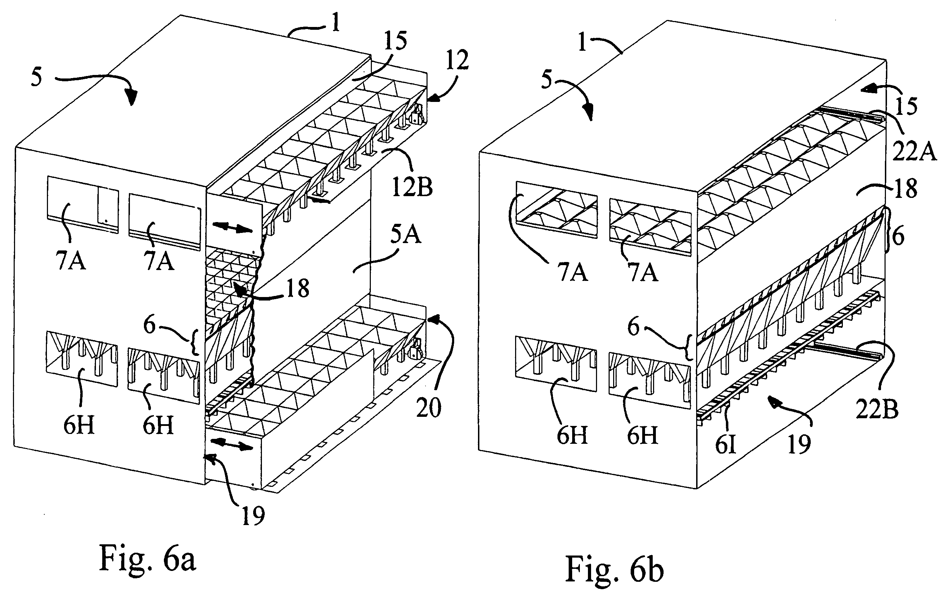

Der Rohrkanal 1 ist in seinem Inneren mit einer Mehrzahl von in Richtung der Rohrkanalachse nebeneinander angeordneten Wanderbettreaktormodulen 5 ausgestattet, die lediglich durch Trennwände aus Blech, die sich quer zur Reaktorkanalachse erstrecken, voneinander getrennt sind. Derartige Wanderbettreaktormodule 5 sind in den Figuren 6a und 6b beispielhaft dargestellt und werden in diesem Zusammenhang noch näher erläutert werden.

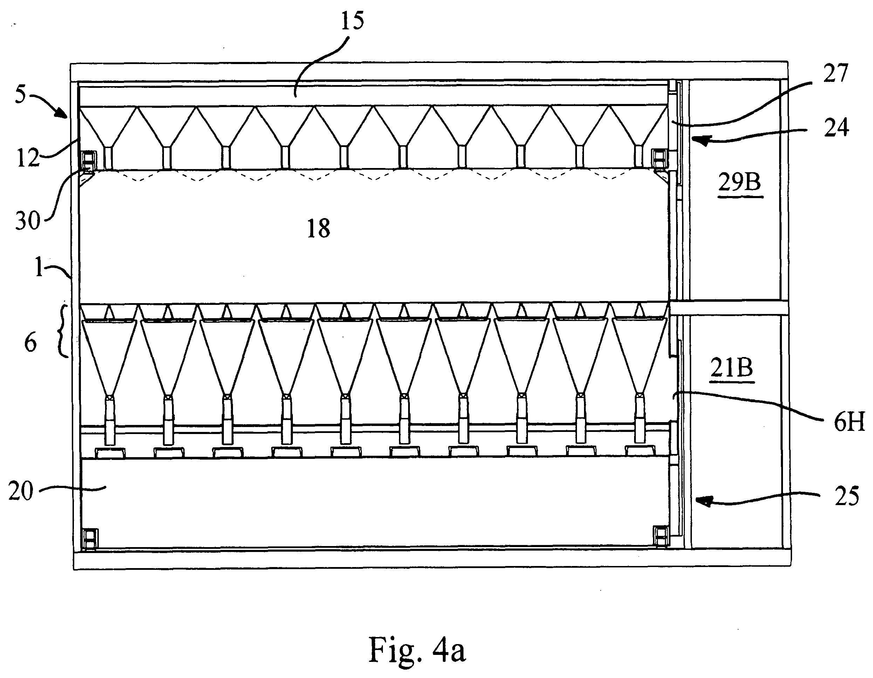

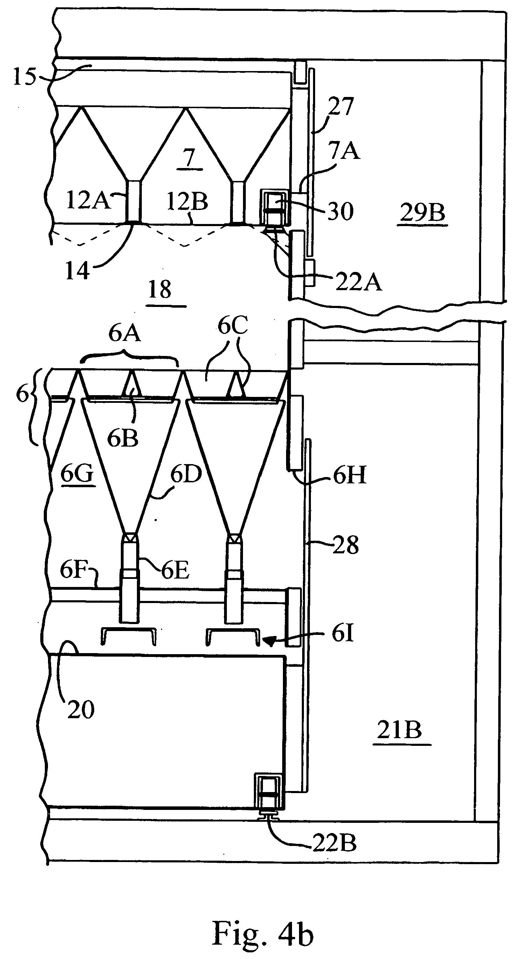

An dieser Stelle sei unter weiterer Bezugnahme auf Fig. 4a und 4b bereits soviel erwähnt, daß die Wanderbettreaktormodule aus folgenden Komponenten bestehen: einem Schüttgutbett 18, aus einem partikelförmigen Schüttgut, z. B. einer Aktivkohle, einem Katalysator, Calciumhydroxyd und/oder anderem. Das Schüttgutbett hat eine von Seltenwänden umfaßte z. B. quadratische Grundfläche und eine dem Behandlungsprozeß angepaßte Betthöhe von z. B. 1,2 m. Es ruht auf einem sogenannten Anströmboden 6, welcher vorzugsweise die aus dem Europäischen Patent Nr. 0 257 653 B1 bekannte Ausgestaltung hat, also aus zumindest nebeneinander angeordneten ersten Schüttgutabzugtrichtem 6A oder trichterförmigen Schüttgutabzugsrinnen besteht Deren Seitenwände weisen Durchtrittsöffnungen 6B auf. Oberhalb derselben befinden sich dachförmige Verteilelemente, die von den Trichterwänden 6A zum Trichterinneren hin abstehen und den Durchtritt des Schüttgutes nach unten und den Eintritt des Fluides in das Schüttgutbett nach oben gestatten. Ein weiterer Fluideintrittsspalt bildet sich am Mündungsumfang vom zweiten Schüttgutabzugstrichter 6D, der sich an die Auslaßmündung der ersten Schüttgutabzugtrichter 6A mit Umfangsspalt nach unten hin anschließt. Sich an die zweiten Schüttgutabzugstrichter 6D nach unten anschließende Schüttauslaßrohre 6E, welche aus thermischen und mechanischen Gründen teleskopierbar ausgeführt sein können, durchdringen eine Staubdecke 6F in Gestalt eines querschnittfüllenden Bodens. Dieser Boden 6F, die Schüttgutabzugstrichter 6A/6D sowie die äußeren Umfassungswände umschließen einen Fluidverteilraum 6G unterhalb des Schüttgutbettes 18. Ein neben einer Seitenwand des Fluidverteilraums 6G, vorzugsweise innerhalb, des Rohrkanals 1 parallel zu dessen Längsachse sich erstreckender seitlicher Zuströmkanal 21 B leitet das zu behandelnde Fluid entlang des gesamten Rohrkanals 1. Da alle Fluidverteilräume 6G durch ein Anströmfenster 6H In der Trennwand zu dem unmittelbar benachbarten Zuströmkanal 21 B versehen sind, kann Jedes Wanderbettreaktormodul des Rohrkanals gleichmäßig mit zu behandelndem Fluid beaufschlagt werden, wobei ausreichende Strömungsquerschnitte sicherstellen, daß der Druckverlust In allen Schüttgutbetten so gut wie gleich groß ist.

Unterhalb der Staubdecke 6F ist unter jedem Schüttgutauslaßrohr 6E eine getaktet horizontal verfahrbare Schüttgutaustragsvorrichtung 61 angeordnet. Deren Aufbau kann an sich beliebig sein, z. B. wie in der EP 0 357 653 B1 näher beschrieben.

Oberhalb jeder Schüttgutschicht 18 befindet sich ein Gassammelraum 7, mit einem seitlichen Anströmfenster 7A zur fluidischen Verbindung mit einem Abströmkanal 29B für behandeltes Fluid. Dieser erstreckt sich entlang des Rohrkanals 1 auf dessen voller Länge.

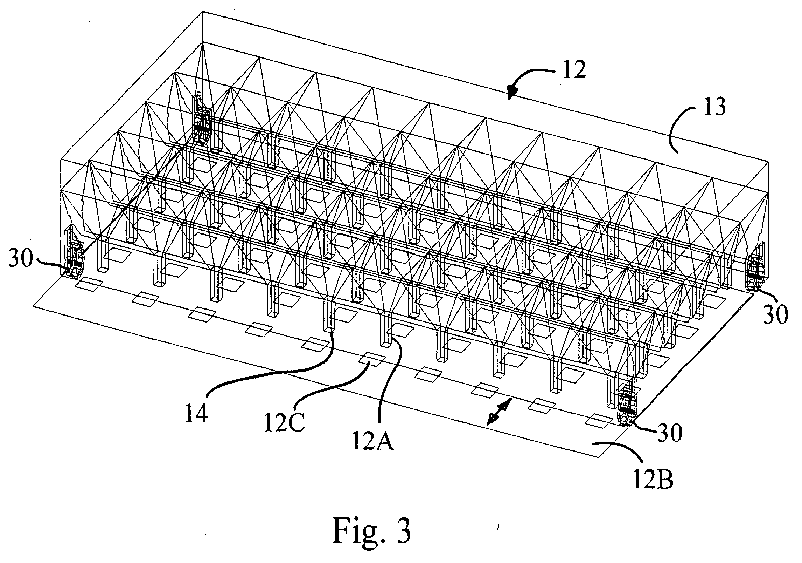

Wie aus Figur 3 näher ersichtlich, ist ein Schüttgutaufgabebehälter 12 vorgesehen, der entlang von Führungen 22A mittels eines einfachen Fahrwerks 30 im Inneren des Rohrkanals parallel zur Rohrkanalachse verfahrbar ist. In dem dargestellten Ausführungsbeispiel weist der Schüttgutaufgabebehälter 12 denselben Querschnitt wie jedes Wanderbettreaktormodul 5 auf. Damit der Schüttgutaufgabebehälter 12 zwischen der Chargierstation 2 und allen von ihm zu versorgenden Schüttgutbetten 18 verfahren werden kann, sind alle betroffenen Wanderbettreaktormodule durch einen Chargierkanal 15 parallel zur Rohrkanalachse miteinander verbunden. Siehe vor allem Figuren 6a und 6b.

Der Schüttgutaufgabebehälter 12 wird unter Bezugnahme auf die Figuren 3 bis 6a näher erläutert: Er besteht aus einer flachen Wanne mit einer Vielzahl von absperrbaren Entladeöffnungen 14 in Form von Mündungsöffnungen von flächenverteilt angeordneten Schüttguttrichtern mit Schüttgutaustrittsrohren 12A. Insoweit entspricht der Boden der flachen Wanne, d. h. des Schüttaufgabebehälters 12 der Art und Anordnung eines Schüttgutverteilbodens, wie er als stationäre Schüttgutverteilvorrichtung zwischen einem Schüttgutvorratsbunker und dem darunterliegenden Schüttgutbett angeordnet und aus der EP 0 357 653 B1 bereits bekannt Ist. Der Unterschied zu dem Bekannten besteht darin, daß dieser Schüttgutverteilboden einen Umfassungsrahmen mit einem Fahrwerk aufweist und somit als verfahrbarer Wagen ausgestaltet ist. Unterhalb der Auslaufmündungen der Schüttgutaustrittsrohre 12A befindet sich ein über den gesamten Querschnitt gehendes Staublech 12B mit der Anordnung der Schüttgutaustrittsrohre 12A entsprechender Verteilung und Größe von Schüttgutdurchlaßöffnungen 12C. In der perspektivischen Darstellung der Fig. 6a ist eine Frontwand und ein Teil des Staubleches des verfahrbaren Schüttgutaufgabebehälters 12 der Übersichtlichkeit halber fortgelassen worden.

Eine Besonderheit des Schüttgutaufgabebehälters 12 besteht in einer, ggf. zusätzlichen, Seitenwand, die als Drosselmittel 27 (Fig. 4a/4b) zum Verschließen des Abströmfensters 7A dient. Diese von dem Schüttgutaufgabebehälter 12 mitbewegte Platte verhindert, daß In dem Bereich, in dem sich der Schüttgutaufgabebehälter 12 gerade befindet, behandeltes Fluid aus dem Gassammelraum 7 in den durchgehenden Abströmkanal 29B übertreten kann. Dadurch werden eigenständige Absperr- oder Drosselklappen für Jedes einzelne dieser Abströrnfenster 7A entbehrlich.

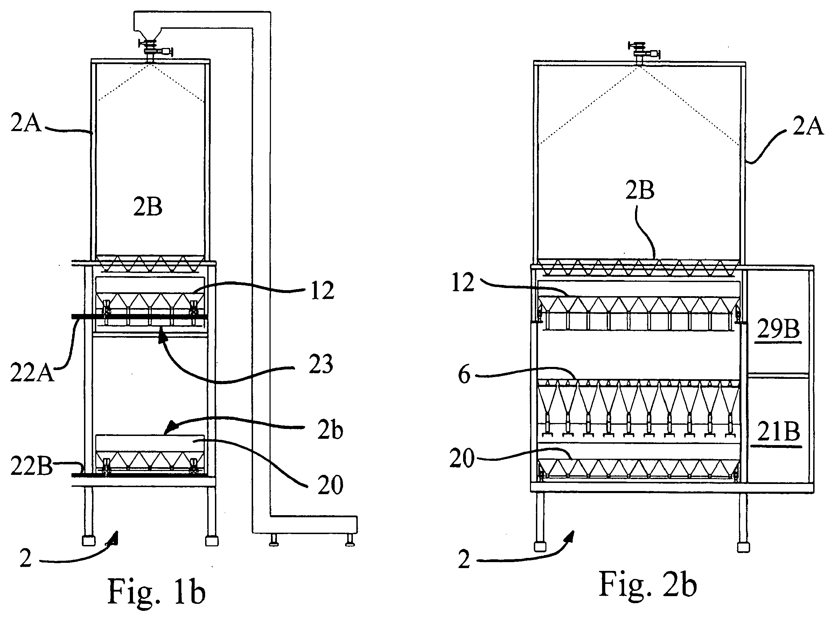

Die Funktionswelse des Schüttgutaufgabebehälters 12 ist so, daß er in der in Figur 1 a dargestellten Chargierposition 23 mit Schüttgut beladen und anschließend jeweils über dasjenige Schüttgutbett 18 verfahren wird, welches einen Schüttguttellaustausch benötigt. Außer beim Schüttgutteilaustausch bleibt die Austragsvorrichtung, wie das Staublech 12B, geschlossen.

Der In der Chargierstation 23 stattfindende Chargiervorgang kann auf verschiedene Weise ablaufen. Bei der In Figur 1 a dargestellten Ausführungsform ist ein Vorratsbunker 2A für Schüttgut mit einem absperrbaren Schüttgutaustragsboden 2B versehen. Durch letzteren wird der verfahrbare Schüttgutaufgabebehälter 12 mit frischem Schüttgut aus dem Vorratsbunker 2A befüllt.

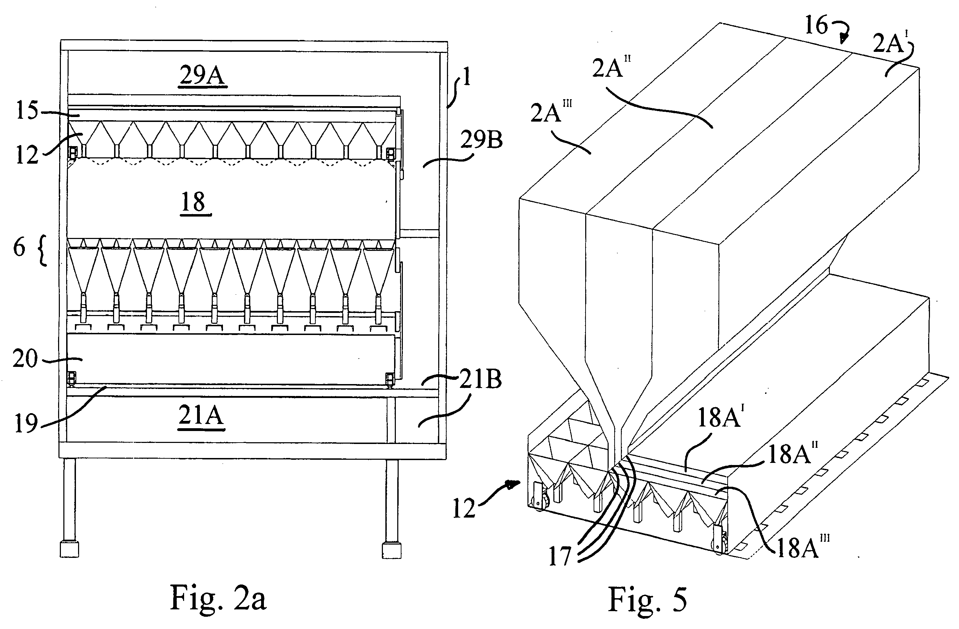

Alternativ kann der Chargiervorgang In der in Figur 5 dargestellten Weise erfolgen. Hier besitzt der Vorratsbunker 2A mindestens einen, bei dem Ausführungsbeispiel sind es drei, Schüttgutaustrittsschlitze am unteren Ende und sind Vorratsbunker und/oder Schüttgutaufgabebehälter In Richtung der Rohrkanalachse relativ zueinander verfahrbar. Dadurch kann eine Schüttgutschicht von einem zum anderen Ende des Schüttgutaufgabehälters (in Verfahrrichtung) eingefüllt werden. In dem dargestellten Ausführungsbeispiel ist der Vorratsbunker als verfahrbarer Chargierbehälter 16 ausgestaltet und in Teilbunker 2A', 2A" und 2A"' unterteilt. Jeder kann mit einem unterschiedlichen Schüttgut befüllt sein. Die Austragsschlitze (Chargieröffnungen 17) liegen unterschiedlich tief, so daß Schüttgutschichten 18A', 18A", 18A"' in dem verfahrbaren Schüftgutaufgabebehälter 12 gebildet werden.

Der Schüttgutteilaustausch erfolgt in an sich bekannter Weise, nämlich indem die Schüttgutaustragsvorrichtung 6I des Anströmbodens 6 (Fig. 4a) horizontal unter Freigabe der Schüttgutrohrmündungen verschoben wird, während sich oberhalb des Schüttgutbettes 18 der Schüttgutaufgabebehälter 12 mit geöffneten Schüttgutaustrittsrohren 12A stationiert ist. Das Schüttgut sackt entsprechend der Betätigung der Schüttgutaustragsvorrichtung 6I von oben nach unten automatisch nach, so daß frisches Schüttgut von oben selbsttätig folgt.

Der Abtransport des ausgetragenen Schüttgutes kann an sich beliebig erfolgen. Bevorzugt wird ein verfahrbarer Schüttgutaufnahmebehälter 20 verwendet, der im Grunde mit dem Schüttgutaufgabebehälter 12 baugleich sein kann. Ein solches Beispiel wurde in den Figuren verwendet. Ein in dem Rohrkanal 1 ausgebildeter durchgehender Entsorgungskanal 19 gestattet ein die benachbarten Wanderbettreaktormodule überschreitendes Fahren des Schüttgutaufnahmebehäfters 20. Dieser wird in der in Flg. 1 a dargestellten Schüttgutaustragsposition 26 entleert.

Eine weitere Besonderheit des verfahrbaren Schüttgutaufnahmebehälters 20 ist eine als Drosselmittel 28 ausgebildete Seitenwand, welche (wie beim Schüttgutaufgabebehälter 12) mit verfahren wird und den Fluiddurchtritt durch das jeweilige Anströmfenster 6H des Wanderbettreaktormoduls, unter dem sich der Schüttgutaufnahmebehälter 20 gerade befindet, absperrt oder drosselt. Dadurch werden gesonderte Verstellklappen vermieden.

Eine wärmetechnisch besonders vorteilhafte Alternative für die Anordnung der Zu- und Abströmkanäle zu und von den Wanderbettreaktormodulen entlang des Rohrkanals 1 ist in Fig. 2a dargestellt. Hier wurde den seitlichen Zu- und Abströmkanälen 21B, 29B, die jetzt allerdings im Querschnitt kleiner ausfallen können, ein oberer Abströmkanal 29A und ein unterer Zuströmkanal 21 A hinzugefügt. Diese sind auf ihrer gesamten Länge fluidisch miteinander verbunden, so daß der wesentliche Teil des zuströmenden, d. h. zu behandelnden Fluides unterhalb des Anströmbodens und der wesentliche Teil des abströmenden, d. h. behandelten Fluides oberhalb der Schüttgutbetten abströmen kann. Reaktorboden und Reaktordecke, d. h. Rohrkanalboden und Rohrkanaldecke sind damit beheizt und ersetzen die bisher übliche Begleitheizung.

Die erfindungsgemäße Fluidbehandlungsanlage gestattet eine wirtschaftliche Flu-Idbehandlung vor allem für extrem große Fluidmengen, wie einige Hunderttausend oder Millionen m3 Gas pro Stunde.

### Bezugszeichenliste

- 1: Rohrkanal
- 2: Chargierstation
- 2A: Vorratsbunker
- 2A': Vorratsbunker
- 2A": Vorratsbunker
- 2A"': Vorratsbunker
- 2B: Austragsboden
- 3: Gaseintrittsstutzen
- 4: Gasaustrittsstutzen
- 5: Wanderbettreaktormodule
- 5A: Trennwände
- 6: Anströmboden
- 6A: erster Schüttgutabzugstrichter
- 6B: Durchtrittsöffnung
- 6C: Verteilelemente
- 6D: zweite Schüttgutabzugstrichter
- 6E: Schüttgutauslaßrohre
- 6F: Staubdecke
- 6G: Fluidverteilraum
- 6H: Abströmfenster
- 6I: Schüttgutaustragsvorrichtung
- 7: Gassammelraum
- 7A: Abströmfenster
- 10: Fluidbehandlungsanlage
- 11A: Abströmkanal
- 11B: Abströmkanal
- 12: Schüttgutaufgabebehälter
- 12A: Schüttgutaustrittsrohre
- 12B: Staublech
- 12C: Schüttgutdurchlaßöffnungen
- 13: Beladungsöffnung
- 14: Entladeöffnung
- 15: Chargierkanal
- 16: Chargierbehälter
- 17: Chargieröffnung
- 18: Schüttgutbett
- 18A': Schüttgutschicht
- 18A": Schüttgutschicht
- 18A'": Schüttgutschicht
- 19: Entsorgungskanal
- 20: Schüttgutaufnahmebehälter
- 21A: Zuströmkanal
- 21B: Zuströmkanal
- 22A: Führungen
- 22B: Führungen
- 23: Chargierposition
- 24: Schüttgutteilaufgabeposition
- 25: Schüttgutteilnahmeposition
- 26: Schüttgutaustragsposition
- 27: Drosselmittel
- 28: Drosselmittel
- 29A: Abströmkanal
- 29B: Abströmkanal
- 30: Fahrwerk

## Patentansprüche

1. Verfahren zum Behandeln, insbesondere zum Reinigen, von Fluiden, insbesondere von Gasen, mittels mindestens einem ersten Schüttgut (Behandlungsmittel I), bei dem das erste Schüttgut einem Fluidstrom (Flugstrom) aufgegeben und von diesem bis zu einem Filter mittransportiert und dort an der Oberfläche des Filters zurückgehalten wird, während das Fluid den Filter durchströmt, wobei der von dem ersten Schüttgut auf dem Filter gebildete Filterkuchen von Zeit zu Zeit zumindest teilweise entfernt wird,
**dadurch gekennzeichnet,**
a) **daß** das zu behandelnde, mit dem Behandlungsmittel I vermischte Fluid zum Nachreagieren und Welterbehandeln durch einen ein Schüttgutbett aus einem zweiten Schüttgut (Behandlungsmittel II) bildenden Wanderbettreaktor geführt wird, bei dem das Fluid das Schüttgutbett im wesentlichen von unten nach oben durchströmt und das zweite Schüttgut das Schüttgutbett im Gegenstrom zum Fluid im wesentlichen von oben nach unten durchwandert, aus dem am unteren Ende des Schüttgutbettes Schüttgutteilmengen abgezogen und In den am oberen Ende des Schüttgutbettes Schüttgutteilmengen aufgegeben werden, wobei an dem zweiten Schüttgut, d. h. der Oberfläche der Schüttgutpartikelund/oder Im Zwischenkorn-Volumen zwischen seinen Schüttgutpartikeln das erste Schüttgut oder eine Fraktion davon aus dem Fluidstrom sich, insbesondere im Anströmbereich des zweiten Schüttgutes, absetzt,
b) **daß** das zu behandelnde Fluid an dem abgesetzten ersten Schüttgut (Behandlungsmittel I) ggf. nachreagiert und mittels des zweiten Schüttgutes (Behandlungsmittel II) in dem Wanderbettreaktor weiterbehandelt wird.
c) **daß** mit den Schüttgutteilmengen am unteren Ende des Schüttgutbettes die ersten und zweiten Schüttgutpartikel gemeinsam abgezogen werden.

2. Verfahren nach Anspruch 1, **dadurch gekennzeichnet, dass** das dem zu behandelnden Fluidstrom unter Ausbildung eines Flugstromes aufgegebene erste Schüttgut staubförmige Aktivkohle ist.

3. Verfahren nach Anspruch 1 oder 2, **dadurch gekennzeichnet, dass** die Eindringtiefe der Partikel des ersten Schüttgutes in das Schüttgutbett durch entsprechende Steuerung des Schüttgutteilmengentausches beeinflusst wird.

4. Verfahren nach einem der Ansprüche 1 bis 3, **dadurch gekennzeichnet, dass** die zweiten Schüttgutpartikel aus Adsorbentien, wie Calciumhydroxyd, NaOH oder einem anderen zur Behandlung des Fluides geeignetem festen partikelförmigen Material für chemische Behandlung von anorganischen Schadstoffen, wie HCl, SO₂, bestehen.

5. Verfahren nach einem der Ansprüche 1 bis 4, **dadurch gekennzeichnet, dass** als Schüttgut für die Wanderbettreaktoren ein Granulat aus Braunkohle, Steinkohle, Kalkstein und/oder Sorbalit verwendet wird.

6. Verfahren nach Anspruch 5, **dadurch gekennzeichnet, dass** die Granulate schichtweise im Schüttgutbett vorliegen.

7. Verfahren nach einem der Ansprüche 1 bis 6, **dadurch gekennzeichnet, dass** die aus dem Wanderbettreaktormodulen ausgetragenen Schüttgüter nach Schüttgutarten getrennt ausgetragen werden.

8. Verfahren nach einem der Ansprüche 1 bis 7, **dadurch gekennzeichnet, dass** eine alkalische Verbindung in Partikelform (erstes Schüttgut) dem Abgas unter Ausbildung einer Flugstromwolke zugegeben wird.

9. Verfahren nach einem der Ansprüche 1 bis 8, **dadurch gekennzeichnet, dass** die Zudosierung des ersten Schüttgutes unter Ausbildung einer von dem zu behandelnden Abgas generierten Flugstromwolke getaktet erfolgt.

10. Verfahren nach einem der Ansprüche 1 bis 9, **dadurch gekennzeichnet, dass** als Führungsgröße für das Austragen des Granulat/Partikel-Gemisches der Druckverlustanstieg im Gegenstromwanderbettreaktor verwendet wird.

11. Verfahren nach einem der Ansprüche 1 bis 10, **dadurch gekennzeichnet, dass** ein In einem Sinterprozess eingesetzter Koks vor dem Verbrennen auf dem Sinterband als Adsorptionsmittel in einem Gegenstromwanderbettreaktor dient.

12. Verfahren nach einem der Ansprüche 1 bis 11,
bei dem das Fluid ein Schüttgutbett im wesentlichen von unten nach oben durchströmt und das Schüttgut das Schüttgutbett im Gegenstrom zum Fluid im wesentlichen von oben nach unten durchwandert, und bei dem am unteren Ende des Schüttgutbettes Schüttgutteilmengen abgezogen und am oberen Ende des Schüttgutbettes Schüttgutteilmengen dem Schüttgutbett aufgegeben werden,
wobei mehrere Schüttgutbetten parallel betrieben werden und, insbesondere, der Schüttgutteilaustausch in den Schüttgutbetten im wesentlichen nacheinander erfolgt,
bei dem das Schüttgutteilmengenaufgeben dadurch **erfolgt,** daß
a) für den Schüttgutteilaustausch zum Aufgeben von Schüttgutteilmengen in das Schüttgutbett ein verfahrbarer Schüttgutaufgabebehälter mit einer Schüttgutverteilanordnung zum gleichmäßig schichtweisen Verteilen des Schüttgutes über das jeweilige Schüttgutbett mit mindestens einer Beladungsöffnung und mindestens einer verschließbaren Entladeöffnung verwendet wird,
b) der verfahrbare Schüttgutaufgabebehälter in mindestens einer Chargierposition mit Schüttgut beladen wird,
c) der Schüttgutaufgabebehälter über ein erstes Schüttgutbett verfahren und seine Entladeöffnung freigegeben wird, wobei das Schüttgut so lange abgegeben wird, wie für den Schüttgutteilaustausch erforderlich, also bis das darunter befindliche Schüttgutbett seine Sollhöhe an Schüttgut wieder erreicht hat oder der Schüttgutteilabzug beendet worden ist,
d) der Schüttgutaufgabebehälter zu einem anderen Schüttgutbett weiter verfahren wird, wobei die mindestens eine Entladeöffnung erforderlichenfalls geschlossen gehalten wird,
e) die Schritte der Schüttgutteilmengenabgabe und das anschließende Weiterverfahren für weitere Betten wiederholt werden und
f) nach vollzogenem Schüttgutteilaustausch, insbesondere für mehrere Betten, der Schüttgutaufgabebehälter wieder in eine Chargierposition verfahren wird.

13. Fluidbehandlungsanlage mit einem als Wanderbettreaktor ausgebildeten Schüttgutfilter, bestehend aus mehreren nebeneinander angeordneten, parallel betreibbaren Schüttgutbetten, bei denen das zu behandelnde Fluid ein Schüttgutbett im wesentlichen von unten nach oben durchströmt und das Schüttgut das Schüttgutbett im Gegenstrom zum Fluid im wesentlichen von oben nach unten durchwandert, indem am unteren Ende des Schüttgutbettes Schüttgutteilmengen abgezogen und am oberen Ende des Schüttgutbettes Schüttgutteilmengen dem Schüttgutbett aufgegeben werden zum Durchführen des Verfahrens nach Anspruch 12, bei der die Schüttgutbetten durch einen gemeinsamen horizontalen Chargierkanal (15) miteinander verbunden sind und zumindest ein Schüttgutaufgabebehälter (12) durch den Chargierkanal (15) zwischen einer Chargierposition (23) und mehreren Schüttgutteilaufgabepositionen (24) oberhalb der Schüttgutbetten (18) verfahrbar ist.

14. Fluidbehandlungsanlage nach Anspruch 13, **dadurch gekennzeichnet, dass** ein an Führungen (22A, 22B) verfahrbarer Schüttgutaufgabebehälter (12) vorgesehen ist, der aus einer Wanne mit über den Wannenboden flächenverteilten oder mit linienförmig angeordneten, verschließbaren Entladeöffnungen (14) für Schüttgut besteht.

15. Fluidbehandlungsanlage nach Anspruch 14 **dadurch gekennzeichnet, dass** mindestens ein Chargierbehälter (16) mit mindestens einer linienförmigen oder spaltförmigen Chargieröffnung (17) versehen ist und zum flächigen Beladen eines Schüttgutaufgabebehälters (12) relativ zu diesem verfahrbar ist.

## Claims

1. A method for the treatment of, in particular purification of, fluids in particular gases, by means of at least one first bulk material (treatment agent I) wherein the first bulk material is delivered to a fluid stream (entrained flow) and is co-transported by said fluid stream to a filter and there is retained on the surface of the filter whilst the fluid flows through the filter, wherein the filter cake formed by the first bulk material on the fitter is removed from time to time at least partially, **characterized in**
a) **that** the fluid to be treated, mixed with treatment agent I is passed through a fluidized bed reactor forming a bulk material bed from a second bulk material (treatment agent II) for after-reacting and further treatment, wherein the fluid flows through the bulk material bed substantially from bottom to top and the second bulk material migrates through the bulk material bed in counterflow to the fluid substantially from top to bottom, from which at the lower end of the bulk material bed, bulk material partial quantities are removed and into which at the upper end of the bulk material bed, bulk material partial quantities are delivered, wherein on the second bulk material, i.e. the surface of the bulk material particles and/or in the intergranular volume between the bulk material particles thereof, the first bulk material or a fraction thereof is deposited from the fluid stream, in particular in the inflow region of the second bulk material,
b) **that** the fluid to be treated optionally after-reacts on the deposited first bulk material (treatment agent I) and is further treated in the fluidized bed reactor by means of the second bulk material (treatment agent II),
c) **that** the first and second bulk material particles are removed jointly with the bulk material partial quantities at the lower end of the bulk material bed.

2. The method according to claim 1, **characterized in that** the first bulk material delivered to the fluid stream to be treated whilst forming an entrained flow is dust-like activated charcoal.

3. The method according to claim 1 or 2, **characterized in that** the penetration depth of the particles of the first bulk material into the bulk material bed is influenced by suitable control of the bulk material partial quantity exchange.

4. The method according to any one of claims 1 to 3, **characterized in that** the second bulk material particles consist of adsorbents such as calcium hydroxide, NaOH or another solid particle-like material suitable for treatment of the fluid for the chemical treatment of inorganic pollutants such as HCl, SO₂.

5. The method according to any one of claims 1 to 4, **characterized in that** a granular material comprising brown coal, bituminous coal, limestone and/or sorbalite is used as bulk material for the fluidized bed reactors.

6. The method according to claim 5, **characterized in that** the granular materials are present in layers in the bulk material bed.

7. The method according to any one of claims 1 to 6, **characterized in that** the bulk materials removed from the fluidized bed reactor modules are removed separately according to types of bulk material.

8. The method according to any one of claims 1 to 7, **characterized in that** an alkaline compound in particle form (first bulk material) is added to the waste gas to form an entrained flow cloud.

9. The method according to any one of claims 1 to 8, **characterized in that** the addition of the first bulk material to form an entrained flow cloud generated by the waste gas to be treated is accomplished in a clocked manner.

10. The method according to any one of claims 1 to 9, **characterized in that** the pressure loss increase in the counterflow fluidized bed reactor is used as guide quantity for the removal of the granular material/particle mixture.

11. The method according to any one of claims 1 to 10, **characterized in that** a coke used in a sintering process before the combustion on the sinter band is used as adsorbent in a counterflow fluidized bed reactor.

12. The method according to any one of claims 1 to 11,
wherein the fluid flows through the bulk material bed substantially from bottom to top and the bulk material migrates through the bulk material bed in counterflow to the fluid substantially from top to bottom, and wherein at the lower end of the bulk material bed, bulk material partial quantities are withdrawn and at
the upper end of the bulk material bed, bulk material partial quantities are delivered to the bulk material bed,
wherein a plurality of bulk material beds are operated in parallel and in particular the partial exchange of bulk material in the bulk material beds takes place substantially successively
wherein the delivery of bulk material partial quantities is accomplished whereby
a) a movable bulk material delivery container with a bulk material distribution arrangement for the uniformly layerwise distribution of the bulk material over the respective bulk material bed with at least one charging opening and at least one closable discharging opening is used for the bulk material partial exchange for delivery of bulk material partial quantities into the bulk material bed,
b) the movable bulk material delivery container is loaded with bulk material in at least one charging position,
c) the bulk material delivery container is moved over a first bulk material bed and its discharging opening is released wherein the bulk material is delivered for as long as is required for the bulk material partial exchange, that is until the bulk material bed located thereunder has reached its desired height of bulk material again or the partial withdrawal of bulk material has ended,
d) the bulk material delivery container is moved further to another bulk material bed, wherein the at least one discharge opening is kept closed if necessary,
e) the steps of bulk material partial quantity delivery and the subsequent further moving are repeated for further beds and
f) after bulk material partial exchange has been completed, in particular for several beds, the bulk material delivery container is moved again into a charging position.

13. Fluid treatment plant having a bulk material filter configured as a fluidized bed reactor, consisting of a plurality of adjacently disposed, bulk material beds which can be operated in parallel, wherein the fluid to be treated flows through a bulk material bed substantially from bottom to top and the bulk material migrates through the bulk material bed in counterflow to the fluid substantially from top to bottom whereby bulk material partial quantities are removed at the lower end of the bulk material bed and at the upper end of the bulk material bed, bulk material partial quantities are delivered to the bulk material bed for carrying out the method according to claim 12, wherein the bulk material beds are interconnected by a common horizontal charging channel (15) and at least one bulk material delivery container (12) is movable through the charging channel (15) between a charging position (23) and a plurality of bulk material partial delivery positions (24) above the bulk material beds (18).

14. The fluid treatment system according to claim 13, **characterized in that** a bulk material delivery container (12) movable on guides (22A, 22B) is provided which consists of a trough having closable discharge openings (14) for bulk material distributed superficially over the bottom of the trough or arranged in a line.

15. The fluid treatment system according to claim 14, **characterized in that** at least one charging container (16) having at least one linear or gap-shaped charging opening (17) is provided and is movable relative to this for the planar loading of a bulk material deliver container (12).

## Revendications

1. Procédé de traitement, en particulier de nettoyage, de fluides, en particulier de gaz, au moyen d'au moins une première matière en vrac (moyen de traitement I), dans lequel la première matière en vrac est fournie à un courant de fluide (écoulement aérien) et est transportée avec celui-ci jusqu'à un filtre et y est maintenue à la surface du filtre, pendant que le fluide traverse le filtre, sachant que le gâteau de filtration formé sur le filtre par la première matière en vrac est au moins partiellement enlevé de temps en temps,
**caractérisé en ce que**
a) le fluide à traiter mélangé au moyen de traitement I est dirigé à travers un réacteur à lit à mouvement formant un lit de matière en vrac à partir d'une seconde matière en vrac (moyen de traitement II) pour une réaction ultérieure et une poursuite du traitement, dans lequel le fluide traverse le lit de matière en vrac essentiellement de bas en haut et la seconde matière en vrac traverse le lit de matière en vrac essentiellement de haut en bas à contre-courant par rapport au fluide, duquel des quantités partielles de matière en vrac sont retirées à l'extrémité inférieure du lit de matière en vrac et dans lequel des quantités partielles de matière en vrac sont fournies à l'extrémité supérieure du lit de matière en vrac, sachant que sur la seconde matière en vrac, c'est à dire la surface des particules de matière en vrac et/ou dans le volume de grains intermédiaire entre ses particules de matière en vrac, la première matière en vrac ou une fraction de celle-ci du courant fluidique se dépose, en particulier dans la zone de soufflage de la seconde matière en vrac,
b) le fluide à traiter réagit ultérieurement le cas échéant sur la première matière en vrac déposée (moyen de traitement I) et continue d'être traité dans le réacteur à lit en mouvement au moyen de la seconde matière en vrac (moyen de traitement II),
c) les premières et secondes particules de matière en vrac sont retirées ensemble avec les quantités partielles de matière en vrac à l'extrémité inférieure du lit de matière en vrac.

2. Procédé selon la revendication 1, **caractérisé en ce que** la première matière en vrac fournie au courant fluidique à traiter par formation d'un courant aérien est du charbon actif pulvérulent.

3. Procédé selon la revendication 1 ou 2, **caractérisé en ce que** la profondeur de pénétration des particules de la première matière en vrac dans le lit de matière en vrac est influencée par une commande correspondante de l'échange de quantités partielles de matière en vrac.

4. Procédé selon l'une des revendications 1 à 3, **caractérisé en ce que** les secondes particules de matière en vrac sont composées d'adsorbants, comme de l'hydroxyde de calcium, du NaOH ou d'un autre matériau solide formant des particules approprié pour le traitement du fluide pour le traitement chimique de contaminants anorganiques, comme le HCI, le SO₂.

5. Procédé selon l'une des revendications 1 à 4, **caractérisé en ce qu'**un granulat de lignite, de houille, de calcaire et/ou de sorbalite est employé en tant que matière en vrac pour les réacteurs à lit à mouvement.

6. Procédé selon la revendication 5, **caractérisé en ce que** les granulats sont présents par couches dans le lit de matière en vrac.

7. Procédé selon l'une des revendications 1 à 6, **caractérisé en ce que** les matières en vrac sorties des modules de réacteur à lit en mouvement sont sorties séparément en fonction des types de matière en vrac.

8. Procédé selon l'une des revendications 1 à 7, **caractérisé en ce qu'**une liaison alcaline sous forme de particules (première matière en vrac) est ajoutée aux gaz d'échappement par formation d'un nuage de courant aérien.

9. Procédé selon l'une des revendications 1 à 8, **caractérisé en ce que** l'addition dosée de la première matière en vrac a lieu de façon cadencée par formation d'un nuage de courant aérien généré par les gaz d'échappement à traiter.

10. Procédé selon l'une des revendications 1 à 9, **caractérisé en ce que** la progression de la perte de pression dans le réacteur à lit à mouvement à contre-courant est employée en tant que grandeur-guide pour l'alimentation du mélange de granulat/particules.

11. Procédé selon l'une des revendications 1 à 10, **caractérisé en ce qu'**un coke utilisé au cours d'un procédé de frittage avant la combustion sur la bande frittée sert en tant que moyen d'adsorption dans un réacteur à lit à mouvement à contre-courant.

12. Procédé selon l'une des revendications 1 à 11,
fluide traverse un lit de matière en vrac essentiellement de bas en haut et la matière en vrac traverse le lit de matière en vrac essentiellement de haut en bas à contre-courant par rapport au fluide, et dans lequel des quantités partielles de matière en vrac sont retirées à l'extrémité inférieure du lit de matière en vrac et des quantités partielles de matière en vrac sont fournies au lit de matière en vrac à l'extrémité supérieure du lit de matière en vrac,
sachant que plusieurs lits de matière en vrac sont exploités en parallèle, et, en particulier, l'échange partiel de matière en vrac dans les lits de matière en vrac s'effectue essentiellement l'un après l'autre,
dans lequel l'alimentation de quantités partielles de matière en vrac s'effectue en ce que
a) pour l'échange partiel de matière en vrac pour fournir des quantités partielles de matière en vrac dans le lit de matière en vrac, on emploie un conteneur d'alimentation de matière en vrac mobile avec un agencement de répartition de la matière en vrac pour la répartition en couches égales de la matière en vrac au-dessus du lit de matière en vrac respectif avec au moins une ouverture de chargement et au moins une ouverture de déchargement pouvant être fermée,
b) le conteneur d'alimentation de matière en vrac mobile est chargé de matière en vrac dans au moins une position de chargement,
c) le conteneur d'alimentation de matière en vrac est déplacé sur un premier lit de matière en vrac et son ouverture de déchargement est libérée, sachant que la matière en vrac est alimentée tant que cela est nécessaire pour l'échange partiel de matière en vrac, c'est à dire jusqu'à ce que le lit de matière en vrac se trouvant dessous ait à nouveau atteint sa hauteur de consigne de matière en vrac ou que le retrait de matière en vrac soit terminé,
d) le conteneur d'alimentation de matière en vrac continue d'être déplacé vers un autre lit de matière en vrac, sachant que l'au moins une ouverture de déchargement est maintenue fermée si nécessaire,
e) les étapes d'alimentation de quantité de matière en vrac et le procédé ultérieur qui leur succède sont répétés pour des lits supplémentaires et
f) une fois l'échange partiel de matière en vrac terminé, en particulier pour d'autres lits, le conteneur d'alimentation de matière en vrac retourne dans une position de chargement.

13. Installation de traitement de fluide comprenant un filtre à matière en vrac conçu en tant que réacteur à lit à mouvement composé de plusieurs lits de matière en vrac disposés les uns à côté des autres, pouvant être exploités en parallèle, dans lesquels le fluide à traiter traverse un lit de matière en vrac essentiellement de bas en haut et la matière en vrac traverse le lit de matière en vrac essentiellement de haut en bas à contre-courant par rapport au fluide, en ce que des quantités partielles de matière en vrac sont retirées à l'extrémité inférieure du lit de matière en vrac et des quantités partielles de matière en vrac sont fournies au lit de matière en vrac à l'extrémité supérieure du lit de matière en vrac pour exécuter le procédé selon la revendication 12, dans lequel les lits de matière en vrac sont reliés entre eux par un canal de chargement (15) horizontal commun et au moins un conteneur d'alimentation de matière en vrac (12) peut être déplacé par le canal de chargement (15) entre une position de chargement (23) et plusieurs positions d'alimentation partielle de matière en vrac (24) au-dessus des lits de matière en vrac (18).

14. Installation de traitement de fluide selon la revendication 13, **caractérisé en ce qu'**un conteneur d'alimentation de matière en vrac (12) mobile sur des guides (22A, 22B) est prévu, qui est composé d'une cuve avec des ouvertures de déchargement (14) de matière en vrac, pouvant être fermées, disposées en étant réparties en surface sur le fond de la cuve ou en lignes.

15. Installation de traitement de fluide selon la revendication 14, **caractérisé en ce qu'**au moins un conteneur de chargement (16) est doté d'au moins une ouverture de chargement (17) en forme de ligne ou de fente et est mobile par rapport à un conteneur d'alimentation de matière en vrac (12) pour le chargement en surface de celui-ci.
